(19) Europäisches Patentamt
European Patent Office
Office européen des brevets

(11) **EP 3 796 138 A1**

(12) **EUROPEAN PATENT APPLICATION**
published in accordance with Art. 153(4) EPC

(43) Date of publication:
**24.03.2021 Bulletin 2021/12**

(21) Application number: **19803096.7**

(22) Date of filing: **06.03.2019**

(51) Int Cl.:
*G06F 3/041* (2006.01)  *G06F 3/01* (2006.01)
*G06F 3/0354* (2013.01)  *G06F 3/042* (2006.01)

(86) International application number:
**PCT/JP2019/008916**

(87) International publication number:
**WO 2019/220749 (21.11.2019 Gazette 2019/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2018  JP 2018096488**

(71) Applicant: **Alps Alpine Co., Ltd.
Tokyo 145-8501 (JP)**

(72) Inventor: **WAKUDA, Hiroshi
Tokyo 145-8501 (JP)**

(74) Representative: **Schmitt-Nilson Schraud Waibel
Wohlfrom
Patentanwälte Partnerschaft mbB
Pelkovenstraße 143
80992 München (DE)**

(54) **INPUT DEVICE**

(57)    An input device includes an operation panel member having a touch-sensitive surface and configured to detect coordinates of a touched position within the touch-sensitive surface, a first sensor, a second sensor, and a third sensor each disposed on a reference plane spaced from the operation panel member and configured to detect respective distances to the operation panel member, and a signal processing unit configured to process signals from the operation panel member, the first sensor, the second sensor, and the third sensor, wherein the operation panel member is capable of inclining relative to the reference plane in response to load applied to the touched position, and wherein the signal processing unit is configured to calculate a displacement of the operation panel member occurring upon a touch operation at the touched position based on coordinates of the touched position within the touch-sensitive surface detected by the operation panel member and the respective distances detected by the first sensor, the second sensor, and the third sensor.

FIG.3

(a)

(b)

**Description**

[Technical Field]

The disclosures herein relate to an input device.

[Background Art]

An input device capable of detecting pressure applied to a touchpad is known in the art.

Patent Document 1 identified below, for example, discloses an input device which has piezoelectric sensors disposed at the corners of a touchpad to detect pressure applied to the touchpad, and which calculates pressure based on signals output from the piezoelectric sensors.

[Related-Art Documents]

[Patent Document]

[Patent Document 1] Japanese Patent No. 5655089

[Summary of the Invention]

[Problem to be Solved by the Invention]

It may be noted that, as a touchpad which allows a surface depression in response to applied pressure and provides an operation mode and a tactile sensation in accordance with the amount of depression, the input device disclosed in Patent Document 1 cannot detect the amount of a surface depression, i.e., a displacement, at a touched position with high accuracy.

It is an object of the present disclosures to provide an input device capable of detecting a displacement at the touched position with high accuracy.

[Means to Solve the Problem]

An input device according to an embodiment includes an operation panel member having a touch-sensitive surface and configured to detect coordinates of a touched position within the touch-sensitive surface, a first sensor, a second sensor, and a third sensor each disposed on a reference plane spaced from the operation panel member and configured to detect respective distances to the operation panel member, and a signal processing unit configured to process signals from the operation panel member, the first sensor, the second sensor, and the third sensor, wherein the operation panel member is capable of inclining relative to the reference plane in response to load applied to the touched position, and wherein the signal processing unit is configured to calculate a displacement of the operation panel member occurring upon a touch operation at the touched position based on coordinates of the touched position within the touch-sensitive surface detected by the operation panel member and the respective distances detected by the first sensor, the second sensor, and the third sensor.

[Advantage of the Invention]

According to the present disclosures, an input device capable of detecting a displacement at the touched position with high accuracy is provided.

[Brief Description of Drawings]

Fig. 1 is a perspective view illustrating the configuration of an input device according to an embodiment.
Fig. 2 is a top view illustrating the configuration of the input device according to the embodiment.
Fig. 3 is a cross-sectional view illustrating the configuration of the input device according to the embodiment.
Fig. 4 is a drawing illustrating an unspecified XYZ coordinate system.
Fig. 5 is a drawing showing positional relationships in an XYZ coordinate system.
Fig. 6 is a drawing illustrating an example of a relationship between an applied load and a displacement in the Z-axis direction.

Fig. 7 is a drawing illustrating positional relationships in an example of a method of determining load.

Fig. 8 is a drawing illustrating linear interpolation in the example of a method of determining load.

Fig. 9 is a drawing illustrating the configuration of a signal processing unit 180.

Fig. 10 is a flowchart illustrating the detail of processing by the signal processing unit 180.

Fig. 11 is an illustrative drawing illustrating an inclination of a movable base.

[Mode for Carrying Out the Invention]

In the following, the embodiments will be described with reference to the accompanying drawings. In the specification and drawings, elements having substantially the same functions or configurations are referred to by the same numerals, and a duplicate description thereof may be omitted.

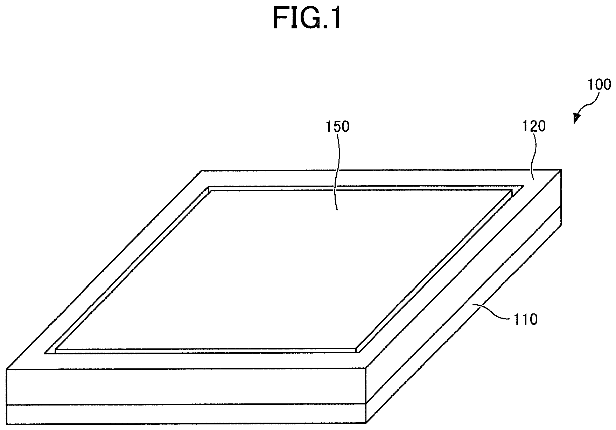

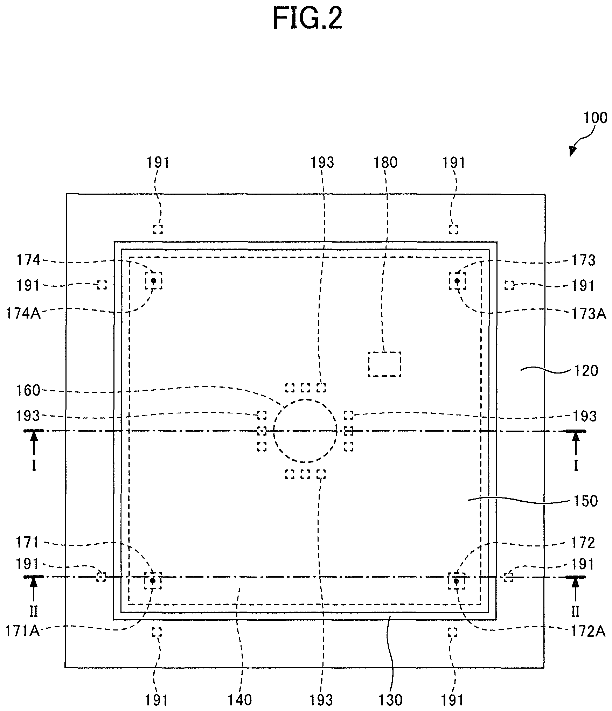

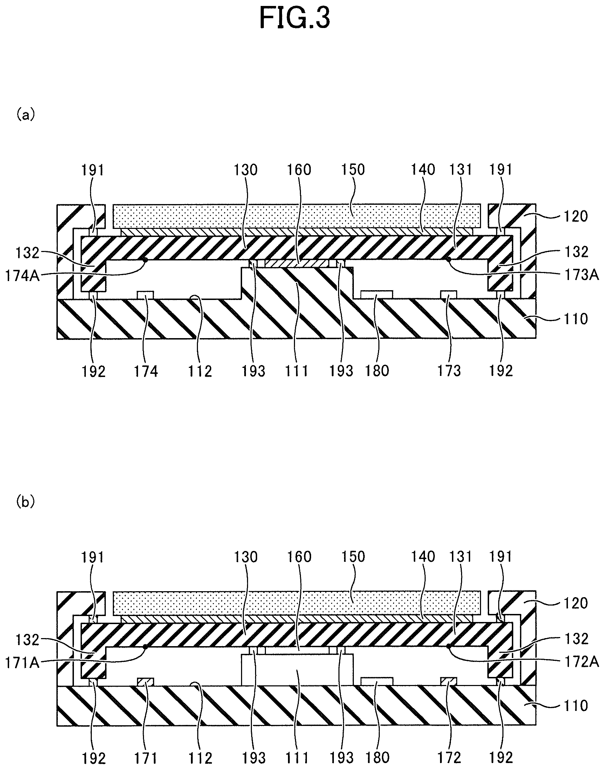

Fig. 1 is a perspective view illustrating the configuration of an input device according to an embodiment. Fig. 2 is a top view illustrating the configuration of the input device according to the embodiment. Fig. 3 is a cross-sectional view illustrating the configuration of the input device according to the embodiment. Fig. 3(a) corresponds to a cross-sectional view taken along the line I-I in Fig. 2. Fig. 3(b) corresponds to a cross-sectional view taken along the line II-II in Fig. 2.

As illustrated in Fig. 1 through Fig. 3, an input device 100 of the embodiment includes a base 110, a bezel 120 fixed on the perimeter area of the base 110, and a decorative panel 150 inside the bezel 120. A touchpad 140 is disposed on the same side of the decorative panel 150 as the base 110. A movable base 130 is disposed on the same side of the touchpad 140 as the base 110. The movable base 130 includes a flat plate part 131 wider than both the touchpad 140 and the decorative panel 150 in a planar view, and includes a wall part 132 extending from the perimeter edge of the flat plate part 131 toward the base 110. The base 110 has a raised part 111 at the center in a planar view, with an actuator 160 disposed on the raised part 111. The actuator 160 is in contact with the raised part 111 and the flat plate part 131. The touchpad 140 is an example of a touchpad, and the movable base 130 is an example of a holder for holding the touchpad 140. The touchpad 140 and the movable base 130 are part of an operation panel member. The base 110 is an example of a support member.

A plurality of rubbers 192 are provided between the wall part 132 and the base 110 such as to be in contact with the wall part 132 and the base 110. The rubbers 192 are at least arranged at the positions of apexes of a triangle in a planar view. For example, the rubbers 192 are arranged around each of the four corners of the touchpad 140 in a planar view.

A plurality of rubbers 191 are provided between the flat plate part 131 and the bezel 120 such as to be in contact with the flat plate part 131 and the bezel 120. The rubbers 191 are at least arranged at the positions of apexes of a triangle in a planar view. For example, the rubbers 191 are arranged around each of the four corners of the touchpad 140 such as to overlap the rubbers 192 in a planar view.

A plurality of rubbers 193 are provided between the raised part 111 and the flat plate part 131 such as to be in contact with the raised part 111 and the flat plate part 131. The rubbers 193 are at least arranged at the positions of apexes of a triangle around the actuator 160 in a planar view. For example, the rubbers 193 are arranged at three respective positions between the actuator 160 and each of the four sides of the touchpad 140 (at positions closer to the center of the touchpad 140 in a planar view than are the rubbers 191 and the rubbers 192).

The rubbers 193 are harder than the rubbers 191 and the rubbers 192. The rubbers 191 and the rubbers 192 have substantially the same hardness. The rubbers 191 and the rubbers 192 are an example of first elastic members, and the rubbers 193 are an example of second elastic members. The flat plate part 131 is supported via the elastic members, such that the touch-sensitive surface of the touchpad 140 is operable to incline.

A plurality of photo interrupters 171, 172, 173, and 174 are disposed on the base 110. The photo interrupters 171 through 174 are able to emit light to points 171A through 174A situated, on the upward side thereof, on the flat plate part 131 of the movable base 130, to receive light reflected from the flat plate part 131, and thereby to detect the distances to the points on the flat plate part 131 which are illuminated with light. For example, the photo interrupters 171 through 174 are arranged at inner positions relative to the four corners of the touchpad 140 in a planar view. The photo interrupters 171 through 174 are at least arranged at the positions of apexes of a triangle in a planar view. The photo interrupters 171 through 174 are an example of first through fourth sensors (i.e., photo sensors). A surface 112 of the base 110 on which the photo interrupters 171 through 174 are disposed is an example of a reference plane. The reference plane is spaced apart from the operation panel member (i.e., the movable base 130 and the like). In the present embodiment, the reference plane is implemented as a reference plane containing the X axis and the Y axis, and the direction perpendicular to the reference plane is designated as the Z axis direction (a first direction).

Further, a signal processing unit 180 is disposed on the base 110. The signal processing unit 180 performs a process as will be described later to drive the actuator 160 in response to a touch operation on the touchpad 140, thereby providing tactile feedback to a user. The signal processing unit 180 may be a semiconductor chip, for example. In the present embodiment, the signal processing unit 180 is disposed on the base 110. Notwithstanding this, the position of the signal processing unit 180 is not limited to a particular place, and the signal processing unit 180 may be provided between the touchpad 140 and the movable base 130, for example.

As an example of an operation of the input device 100 configured as described above, the actuator 160 vibrates in the direction perpendicular to the touch-sensitive surface of the touchpad 140 in response to a touch operation on the touchpad 140 in accordance with the position and load of the touch operation. By feeling the vibration on the touch-sensitive surface, the user is able to recognize what response was given to his/her touch operation performed on the input device 100, without visually checking the display device of the input device 100 or the like. For example, in the case in which the input device 100 is implemented in the center console of an automobile for use as various switches, a driver is able to recognize, based on the vibration of the actuator 160, what response was given to his/her touch operation, without turning his/her eyes to the input device 100. It may be noted that the actuator 160 is not limited to the above-noted example, and may be configured to generate vibration in any desired direction.

In the following, a description will be given of the basic concept of processing performed in the present embodiment. In the present embodiment, the distance to the flat plate part 131 detected by each of the photo interrupters 171 through 174 and the coordinates of a touched position detected by the touchpad 140 are used to derive an equation of a plane regarding the flat plate part 131, i.e., an equation of the plane containing the points 171A through 174A, followed by obtaining a displacement at the touched position.

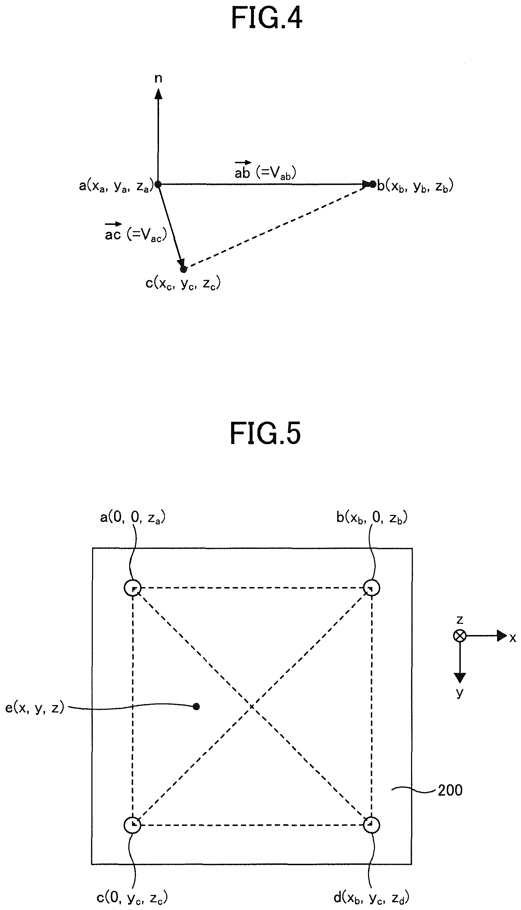

In the following, an equation of a plane will be described. Fig. 4 is a drawing illustrating an unspecified XYZ coordinate system. In the situation under consideration, there are three points, i.e., a point a $(x_a, y_a, z_a)$, a point b $(x_b, y_b, z_b)$, and a point c $(x_c, y_c, z_c)$. In this case, the components $(x_1, y_1, z_1)$ of a vector ac (which will hereinafter be referred to "$V_{ac}$" in some cases) are $(x_c-x_a, y_c-y_a, z_c-z_a)$, and the components $(x_2, y_2, z_2)$ of a vector ab (which will hereinafter be referred to "$V_{ab}$" in some cases) are $(x_b-x_a, y_b-y_a, z_b-z_a)$. Accordingly, the cross product $(V_{ac} \times V_{ab})$ is $(y_1z_2-z_1y_2, z_1x_2-x_1z_2, x_1y_2-y_1x_2)$. This cross product corresponds to a normal vector of the plane containing the point a, the point b, and the point c. When $(y_1z_2-z_1y_2, z_1x_2-x_1z_2, x_1y_2-y_1x_2)$ is designated as $(p, q, r)$, an equation of the plane containing the point a, the point b, and the point c is represented by the following equation (1).

$$p(x-x_a)+q(y-y_a)+r(z-z_a)=0 \quad \dots \quad (1)$$

The equation (1), which is a general formula, may be simplified by using, as an XYZ coordinate system, an orthogonal coordinate system in which the X coordinate and Y coordinate of the point a are zero. Fig. 5 is a drawing showing positional relationships in an XYZ coordinate system. As illustrated in Fig. 5, in the XYZ orthogonal coordinate system under consideration, there are three points on a plane 200, i.e., a point a $(0, 0, z_a)$, a point b $(x_b, 0, z_b)$, a point c $(0, y_c, z_c)$, and a point d $(x_b, y_c, z_d)$. These coordinates are related as follows

$$V_{ac}=(0, \quad y_c, \quad z_c-z_a)=(x_1, \quad y_1, \quad z_1)$$

$$V_{ab}=(x_b, \quad 0, \quad z_b-z_a)=(x_2, \quad y_2, \quad z_2)$$

$$V_{ac} \times V_{ab}=(y_c(z_b-z_a),$$

$$(z_c-z_a)x_b, \quad -y_cx_b)=(p, \quad q, \quad r)$$

As a result, an equation of the plane 200 containing the point a, the point b, and the point c is represented by the following equation (2).

$$y_c(z_b-z_a)x+(z_c-z_a)x_by-y_cx_b(z-z_a)=0 \quad \cdot \cdot \cdot \quad (2)$$

The equation (2) may then be modified into an equation (3) as follows.

$$z=(z_b-z_a)x/x_b+(z_c-z_a)y/y_c+z_a \quad \cdot \cdot \cdot \quad (3)$$

Accordingly, the Z coordinates of three points on any given plane 200 may be identified by the first sensor, the second sensor, and the third sensor, and the X coordinate and the Y coordinate of the touched position on the plane 200 may also be identified by the touch pad, which then allows the Z coordinate of the touched position to be identified. Further, a displacement in the Z-axis direction at the touched position may be obtained from a change in the Z coordinate occurring upon the touch operation.

In the present embodiment, the X coordinate and Y coordinate of the touched position on the touchpad 140 are obtainable by the touchpad 140. Namely, when contact is made to a point e in Fig.5, an X coordinate (x) and a Y coordinate (y) of the point e can be derived from the outputs of the touchpad 140. Further, photo interrupters corresponding to the point a, the point b, and the point c may be arranged as the fist sensor, the second sensor, and the third sensor, respectively, and the X coordinate ($x_b$) of the point b and the Y coordinate ($y_c$) of the point c may be obtained in advance. Then, the outputs of the photo interrupters may be used to detect the distances to the flat plate part 131 to obtain the Z coordinates ($z_a$, $z_b$, $z_c$) of these respective points, followed by calculating the Z coordinate (z) of the point e from the equation (3).

Namely, in the initial state, the plane 200 of the touchpad 140 and a plane containing the three photo interrupters arranged at the positions corresponding to the point a, the point b, and the point c may be parallel to each other. The coordinates of the point e may then be obtained after the flat plate part 131 and the touchpad 140 are inclined upon pressure applied to the touchpad 140. A displacement in the Z-axis direction at the point e occurring upon the application of pressure can thus be obtained. Even in the case in which the plane 200 and the plane containing the three photo interrupters are not parallel to each other in the initial state, a displacement in the Z-axis direction at the point e occurring upon the application of pressure can be obtained through substantially the same calculation.

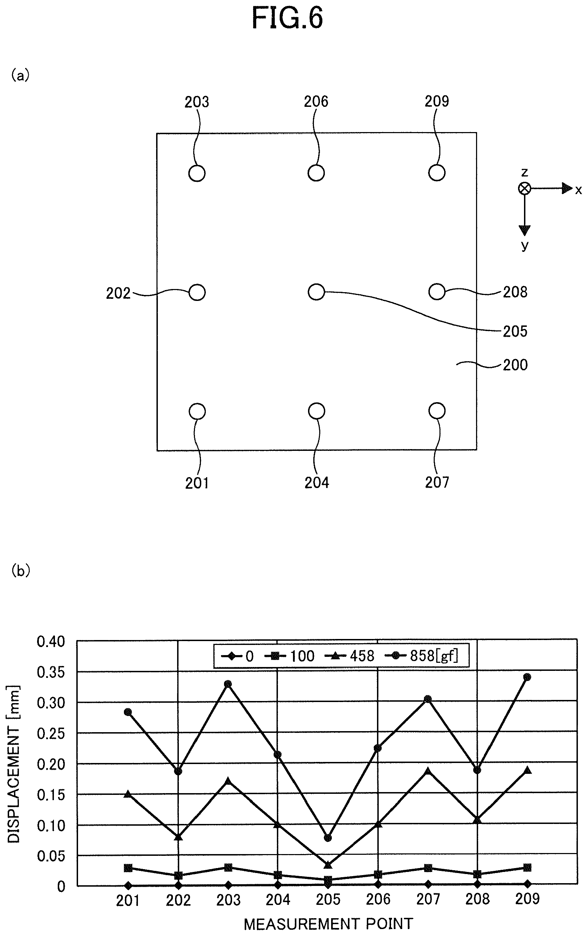

Moreover, a displacement in the Z-axis direction at the point e occurring upon a touch operation may also be used to determine whether the load exerted on the point e exceeds a predetermined reference value, thereby controlling tactile feedback based on the result of such a determination. Namely, the relationships between load exerted on a plurality of points on the plane 200 and displacements in the Z-axis direction may be obtained in advance, A check is then made as to whether the displacement in the Z-axis direction obtained through the above-described method exceeds a threshold value corresponding to the reference value of load, followed by controlling tactile feedback. Fig. 6 is a drawing illustrating an example of a relationship between an applied load and a displacement in the Z-axis direction.

In this example under consideration, as illustrated in Fig. 6(a), touch operations are performed at 9 measurement grid points 201, 202, 203, 204, 205, 206, 207, 208, and 209, with loads of 0 gf (0 N), 100 gf (0.98 N), 458 gf (4.5 N), and 858 gf (8.4 N) as illustrated in Fig. 6(b). In the situation under consideration, further, tactile feedback is given when an applied load exceeds 458 gf (4.5 N) which is used as a reference value. It may be noted that because the actuator 160 and the like are provided under the movable base 130, displacements differ, depending on the position of measurement

In the event in which touch operations are performed at the measurement points 201 through 209, it can be decided whether the applied load exceeds the reference value based on the relationships shown in Fig. 6. Namely, a displacement in the Z-axis direction as calculated from the equation (3) may exceed the displacement corresponding to 458 gf (4.5 N) shown in Fig. 6(b), in which case it can be decided that the applied load exceeds the reference value. In the case in which a touch operation is performed at the measurement point 201, for example, the displacement threshold value is 0.15 mm. A displacement exceeding 0.15 mm can thus be considered as the case in which the applied load just reaches the reference value for generating tactile feedback.

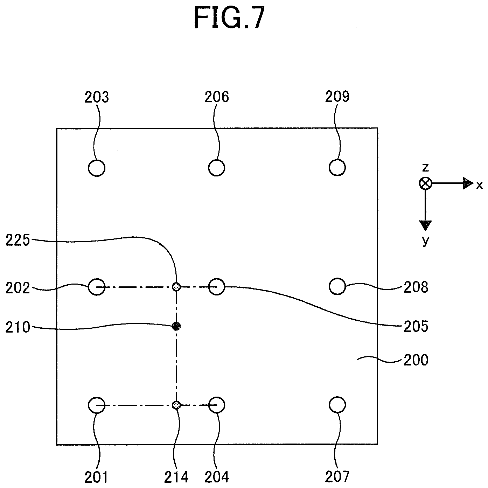

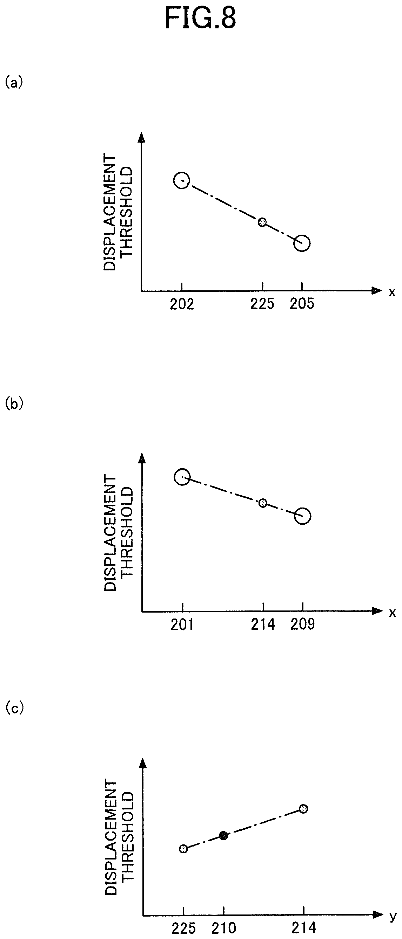

In the event in which a touch operation is performed at a position different from the measurement points 201 through 209, a decision as to whether the applied load reaches a reference value may be made by using the displacement threshold values at the measurement points around such a position. Fig. 7 and Fig. 8 are drawings illustrating an example of a method of determining load. As illustrated in Fig. 7, in the situation under consideration, a touch operation is performed at a point 210 inside the rectangle defied by the measurement points 201, 202, 204, and 205. In this case, as illustrated in Fig. 8(a), a displacement threshold value at a point 225 which has the same Y coordinate as the point 210 between the two measurement points 202 and 205 aligned in the X-axis direction is calculated through linear interpolation from the respective threshold values of the measurement points 202 and 205. Similarly, as illustrated in Fig. 8(b), a displacement threshold value at a point 214 which has the same Y coordinate as the point 210 between the two measurement points 201 and 204 aligned in the X-axis direction is calculated through linear interpolation from the respective threshold values of the measurement points 201 and 204. Further, as illustrated in Fig. 8(c), the threshold value at the point 210 is calculated through linear interpolation from the respective threshold values of the points 225 and 214. Separately from the above, a displacement in the Z-axis direction at the point 210 can be calculated by the equation (3) previously noted. Comparing these values allows a decision to be made as to whether the load applied to the point 210 different from the measurement points 201 through 209 has reached the reference value.

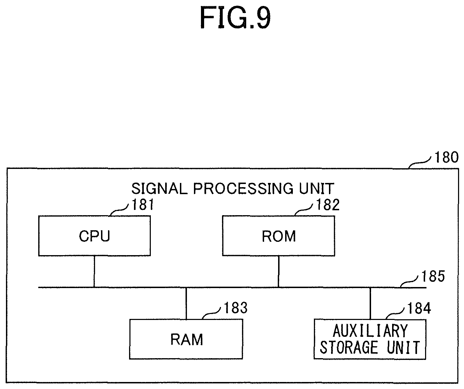

Based on the above-described basic concept, the signal processing unit 180 checks whether the load applied to a point touched on the touchpad 140 has reached the reference value for generating tactile feedback. Fig. 9 is a drawing illustrating the configuration of the signal processing unit 180.

The signal processing unit 180 includes a CPU (central processing unit) 181, a ROM (read only memory) 182, a RAM (random access memory) 183, and an auxiliary storage unit 184. The CPU 181, the ROM 182, the RAM 183, and the auxiliary storage unit 184 together constitute a computer. The individual parts of the signal processing unit 180 are connected to one another through a bus 185.

The CPU 181 executes various types of programs (e.g., load determination program) stored in the auxiliary storage unit 184.

The ROM 182 is a nonvolatile main memory device. The ROM 182 stores various programs, data, and the like necessary for the CPU 182 to execute the various types of programs stored in the auxiliary storage unit 184. More specifically, the ROM 182 stores boot programs and the like such as BIOS (basic input/output system) and EFI (extensible firmware interface).

The RAM 183 is a volatile main memory device such as a DRAM (dynamic random access memory) and an SRAM (static random access memory). The RAM 183 serves as a work area to which the various types of programs stored in the auxiliary storage unit 184 are loaded when executed by the CPU 181.

The auxiliary storage unit 184 is an auxiliary storage device for storing the various types of programs executed by the CPU 181 and various data generated by the CPU 181 executing the various types of programs.

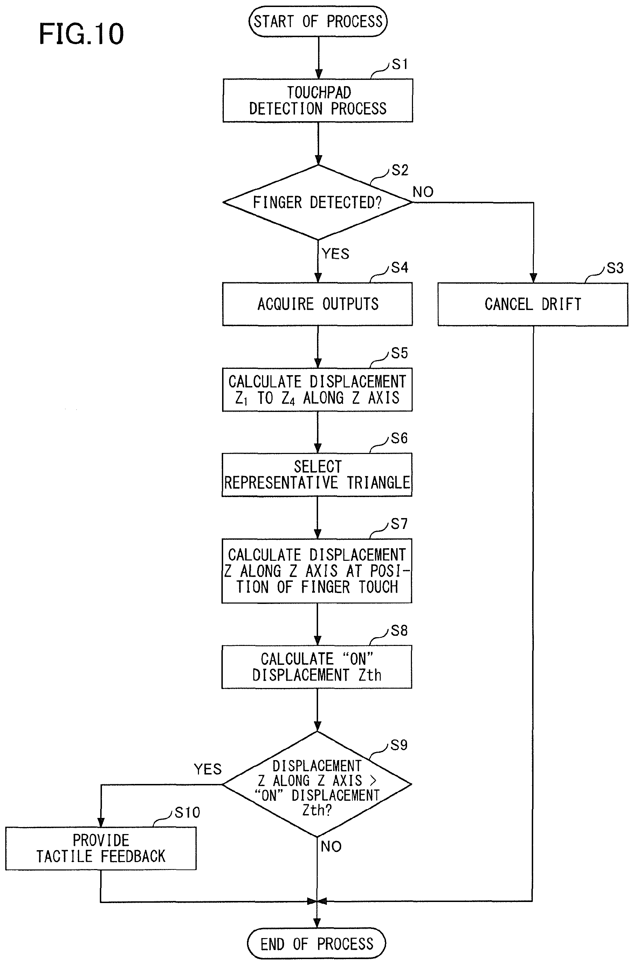

The signal processing unit 180 having the hardware configuration as described above performs processing as in the following. Fig. 10 is a flowchart illustrating the detail of processing by the signal processing unit 180.

The signal processing unit 180 first detects the touchpad 140 (step S1). A check is then made as to whether a finger is in contact with the touchpad 140 (step S2). In the case of no finger touch, the drifts of the photo interrupters 171 through 174 are canceled (step S3).

Upon determining that a finger is in contact with the touchpad 140, the respective detection signals of the photo interrupters 171 through 174 are acquired (step S4). In the case of the output signals of the photo interrupters 171 through 174 being analog signals, for example, signals obtained after conversion into digital signals are acquired.

Subsequently, the detection signals of the photo interrupters 171 through 174 are used to calculate displacements Z1 through Z4 in the Z-axis direction at the respective detection points on the flat plate part 131 (step S5).

Thereafter, one triangle is selected as a representative triangle from a plurality of triangles defined by three of the four photo interrupters 171 through 174 (step S6). The representative triangle may preferably be a triangle that contains therewithin the touched position on the touchpad 140, for example. In the case of the point e being touched in Fig. 5, thus, the triangle acd or the triangle acb may preferably be used. This is because the shorter the distance between the touched position and the photo interrupters 171 through 174 is, the higher the accuracy is.

A displacement Z in the Z-axis direction at the touched position on the touchpad 140 is thereafter calculated (step S7). Namely, the equation (3) is used to calculate the displacement Z in the Z-axis direction at the touched position based on the X coordinate and Y coordinate of the touched position detected by the touchpad 140 and the displacements in the Z-axis direction calculated from the detection signals of the three photo interrupters selected as constituting the representative triangle in step S6.

Further, the relationships between applied loads and displacements in the Z-axis direction, which are obtained in advance as in the example illustrated in Fig. 6 and stored in the ROM 182, are retrieved to calculate a threshold value (i.e., "on" threshold value) Zth in the Z-axis direction at the touched position (step S8).

A check is then made as to whether the displacement Z exceeds the "on" threshold value Zth (step S9). In the case of exceeding the "on" threshold value Zth, the applied load is regarded as exceeding the reference value, in which case the actuator 160 is activated to give tactile feedback (step S10).

In this manner, the input device 100 of the present embodiment gives tactile feedback. The photo interrupters 171 through 174 are able to detect the Z coordinates of the points 171A through 174A on the flat plate part 131 with high accuracy, and the touchpad 140 is able to detect the X coordinate and Y coordinate of the touched position with high accuracy. As a result, the procedure described above allows the Z coordinate of the touched position to be also detected with high accuracy. Even when the "on" threshold value Zth is a small value such in the order of tens of micrometers, thus, a determination as to whether to activate tactile feedback can be made with high accuracy.

The rubbers 193 disposed around the actuator 160 are preferably harder than the rubbers 191 and rubbers 192 disposed in the vicinity of the perimeter edge of the movable base 130. The rubbers 191 and the rubbers 192 support the movable base 130 between the base 110 and the bezel 120 to the extent to which the actuator 160 is able to vibrate the movable base 130. If the hardness of the rubbers 191 and the rubbers 192 were excessively high, it would be difficult to make a user feel vibration upon the activation of the actuator 160. On the other hand, the easier it is for the movable base 130 to incline in response to touch, the more likely it is for the displacements $Z_1$ through $Z_4$ in the Z-axis direction by the photo interrupters 171 through 174 to increase, and, hence, the more likely it is for error to be reduced. Further, the harder the rubbers 303 are, the greater the repulsive force to a user is. Accordingly, the rubbers 193 are preferably harder than the rubbers 191 and the rubbers 192.

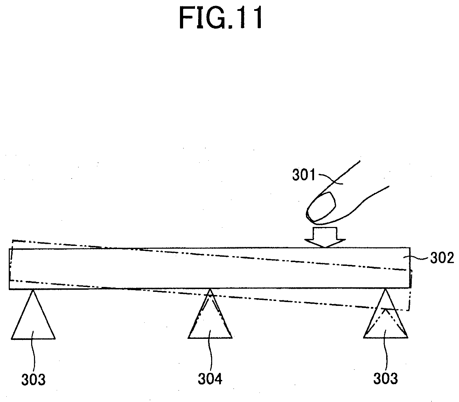

Fig. 11 is an illustrative drawing illustrating an inclination of the movable base. As illustrated in Fig. 11, an operation panel member 302 which includes the movable base 130 and the touchpad 140 is provided with rubbers 303 corresponding to the rubbers 191 and the rubbers 192 disposed at the perimeter thereof, and is provided with a rubber 304 corresponding to the rubbers 193 disposed at the center thereof. In this case, pressing the operation panel member 302 with a finger 301 at a position near the perimeter thereof causes the rubber 303 situated adjacent thereto to be compressed to a large extent while the rubber 304 is hardly compressed. With respect to the other rubber 303, the operation panel member 302 is lifted up above the rubber 303. As a result, large displacements of the operation panel member 302 are observed near both of the rubbers 303. If the hardness of the rubber 304 were comparable with the hardness of the rubbers 303, all of the rubber 304 and the rubbers 303 would be compressed with only small differences therebetween. As a result, relatively small displacements of the operation panel member 302 would be observed near both of the rubbers 303. It may be noted that the actuator 160 of the input device 100 also serves as part of the rubber 304 of Fig. 11 to provide a fulcrum point.

In the processing described above, one representative triangle is identified to calculate a displacement at the touched position, followed by making a determination based on such a displacement. Alternatively, two or more representative triangles may be identified to calculate displacements (i.e., a first displacement, a second displacement, and so on) for the respective representative triangles, followed by obtaining the average value of these displacements and then making a determination based on the average value. Such processing allows a more accurate determination to be made.

The photo interrupters 171 through 174 do not come in contact with the flat plate part 131, and, thus, do not affect the movement of the touchpad 140 responding to a touch operation. Noncontact position detection sensors such as electrostatic sensors may be used in place of the photo interrupters 171 through 174.

The input device of the present disclosures is particularly suitable as an input device embedded in the center console of an automobile. Since the center console is situated between the driver's seat and the front passenger' seat, the plane shape of the input device embedded in the center console may become complex. In the input device of the present disclosures, the three sensors can be disposed at any desired positions. Even when the plane shape of an operation panel member is complex, thus, a displacement of the operation panel member is properly detected with high accuracy.

Although a description has been given with respect to preferred embodiments and the like, the present invention is not limited to these embodiments and the like, but various variations and modifications may be made to these embodiments and the like without departing from the scope of the present invention.

This international patent application claims priority to Japanese Patent Application No. 2018-096488 filed on May 18, 2018, the entire contents of which are incorporated herein by reference.

[Description of Reference Symbols]

100    input device
110    base
120    bezel
130    movable plate
140    touchpad
150    decorative panel
160    actuator
171    through 174 photo interrupter
180    signal processing unit
191    through 193 rubber

Claims

1.   An input device, comprising:

an operation panel member having a touch-sensitive surface and configured to detect coordinates of a touched position within the touch-sensitive surface;
a first sensor, a second sensor, and a third sensor disposed on a reference plane spaced from the operation panel member and configured to detect respective distances to the operation panel member; and
a signal processing unit configured to process signals from the operation panel member, the first sensor, the second sensor, and the third sensor,
wherein the operation panel member is capable of inclining relative to the reference plane in response to load applied to the touched position, and

wherein the signal processing unit is configured to calculate a displacement of the operation panel member occurring upon a touch operation at the touched position based on coordinates of the touched position within the touch-sensitive surface detected by the operation panel member and the respective distances detected by the first sensor, the second sensor, and the third sensor.

2. The input device as claimed in claim 1, wherein the first sensor is configured to detect a distance between the first sensor and a first point on the operation panel member,
wherein the second sensor is configured to detect a distance between the second sensor and a second point on the operation panel member,
wherein the third sensor is configured to detect a distance between the third sensor and a third point on the operation panel member, and
wherein the signal processing unit is configured to identify a plane that contains the first point, the second point, and the third point, and to identify coordinates within the plane corresponding to the coordinates of the touched position within the touch-sensitive surface detected by the operation panel member.

3. The input device as claimed in claim 1 or 2, wherein a direction of the distances detected by the first sensor, the second sensor, and the third sensor is a first direction perpendicular to the reference plane.

4. The input device as claimed in any one of claims 1 to 3, wherein the operation panel member includes:

a touchpad; and
a holder configured to hold the touchpad,
wherein the first sensor, the second sensor, and the third sensor are configured to detect distances to the holder.

5. The input device as claimed in any one of claims 1 to 4, wherein the first sensor, the second sensor, and the third sensor are photo sensors.

6. The input device as claimed in any one of claims 1 to 5, further comprising an actuator configured to generate vibration on the touch-sensitive surface of the operation panel member.

7. The input device as claimed in claim 6, wherein the actuator is disposed at a same side of the operation panel member as the reference plane.

8. The input device as claimed in claim 6 or 7, further comprising:

a support member having the reference plane; and
a first elastic member configured to support the operation panel member on the support member in a manner allowing vibration.

9. The input device as claimed in claim 8, further comprising a second elastic member harder than the first elastic member and disposed closer to a center of the operation panel member than is the first elastic member in a planar view, the second elastic member supporting the operation panel member on the support member.

10. The input device as claimed in any one of claims 1 to 9, further comprising a fourth sensor spaced from the first sensor, the second sensor, and the third sensor on the reference plane and configured to detect a distance to the operation panel member,
wherein the signal processing unit is configured to calculate the displacement as a first displacement,
to calculate a second displacement of the operation panel member occurring upon the touch operation at the touched position based on the coordinates of the touched position detected by the operation panel member and respective distances detected by the fourth sensor and two of the first sensor, the second sensor, and the third sensor, and
to calculate an average value of the first displacement and the second displacement.

# FIG.1

# FIG.2

# FIG.3

(a)

(b)

# FIG.4

$n$

$a(x_a, y_a, z_a)$

$\overrightarrow{ab}\ (=V_{ab})$

$b(x_b, y_b, z_b)$

$\overrightarrow{ac}\ (=V_{ac})$

$c(x_c, y_c, z_c)$

# FIG.5

$a(0,\ 0,\ z_a)$

$b(x_b,\ 0,\ z_b)$

$z$

$x$

$y$

$e(x,\ y,\ z)$

200

$c(0,\ y_c,\ z_c)$

$d(x_b,\ y_c,\ z_d)$

# FIG.6

(a)

(b)

# FIG.7

# FIG.8

(a)

(b)

(c)

# FIG.9

**FIG.10**

```
                    START OF PROCESS

                          │
                          ▼            S1
              ┌───────────────────────┐
              │       TOUCHPAD        │
              │   DETECTION PROCESS   │
              └───────────────────────┘
                          │
                          ▼            S2
                    ╱───────────╲          NO
                   ╱   FINGER     ╲────────────────────────┐
                   ╲  DETECTED?   ╱                         │
                    ╲───────────╱                           │
                          │ YES                             │
                          ▼            S4                   ▼            S3
              ┌───────────────────────┐         ┌───────────────────────┐
              │    ACQUIRE OUTPUTS    │         │     CANCEL DRIFT      │
              └───────────────────────┘         └───────────────────────┘
                          │                                 │
                          ▼            S5                    │
              ┌───────────────────────┐                     │
              │ CALCULATE DISPLACEMENT│                     │
              │  Z₁ TO Z₄ ALONG Z AXIS│                     │
              └───────────────────────┘                     │
                          │                                 │
                          ▼            S6                    │
              ┌───────────────────────┐                     │
              │        SELECT         │                     │
              │ REPRESENTATIVE TRIANGLE│                    │
              └───────────────────────┘                     │
                          │                                 │
                          ▼            S7                    │
              ┌───────────────────────┐                     │
              │ CALCULATE DISPLACEMENT│                     │
              │ Z ALONG Z AXIS AT POSI-│                    │
              │ TION OF FINGER TOUCH  │                     │
              └───────────────────────┘                     │
                          │                                 │
                          ▼            S8                    │
              ┌───────────────────────┐                     │
              │    CALCULATE "ON"     │                     │
              │   DISPLACEMENT Zth    │                     │
              └───────────────────────┘                     │
                          │                                 │
                          ▼            S9                    │
      YES          ╱───────────╲                            │
 ┌───────────────── DISPLACEMENT                            │
 │                 Z ALONG Z AXIS >                         │
 │                 "ON" DISPLACEMENT                        │
 │                      Zth?                                │
 ▼    S10            ╲───────────╱                          │
┌──────────────┐           │ NO                             │
│   PROVIDE     │          │                                │
│ TACTILE FEEDBACK│────────┤◄───────────────────────────────┘
└──────────────┘           │
                           ▼
                     END OF PROCESS
```

Displacement calculations:
- S5: CALCULATE DISPLACEMENT $Z_1$ TO $Z_4$ ALONG Z AXIS

# FIG.11

## INTERNATIONAL SEARCH REPORT

| International application No. |
| --- |
| PCT/JP2019/008916 |

**A. CLASSIFICATION OF SUBJECT MATTER**
Int.Cl. G06F3/041(2006.01)i, G06F3/01(2006.01)i, G06F3/0354(2013.01)i, G06F3/042(2006.01)i

According to International Patent Classification (IPC) or to both national classification and IPC

**B. FIELDS SEARCHED**

Minimum documentation searched (classification system followed by classification symbols)
Int.Cl. G06F3/041, G06F3/01, G06F3/0354, G06F3/042

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 62-147521 A (NIPPON TELEGRAPH AND TELEPHONE CORPORATION) 01 July 1987, page 116, upper right column, line 18 to page 118, lower right column, line 20, fig. 1-4 (Family: none) | 1-10 |
| A | JP 2010-140492 A (KUJIRADA, Masanobu) 24 June 2010, paragraphs [0008]-[0028], fig. 1-6 (Family: none) | 1-10 |

☒ Further documents are listed in the continuation of Box C.   ☐ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 02.04.2019 | 09.04.2019 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/008916

| C (Continuation). DOCUMENTS CONSIDERED TO BE RELEVANT | | |
|---|---|---|
| Category* | Citation of document, with indication, where appropriate, of the relevant passages | Relevant to claim No. |
| A | US 2016/0320919 A1 (ZHANG, W.) 03 November 2016, paragraphs [0036]-[0044], fig. 4A, 4B & CN 102779001 A | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5655089 B

- JP 2018096488 A